# EUROPÄISCHE PATENTSCHRIFT

(11) **EP 1 043 531 B1**
(45) Veröffentlichungstag und Bekanntmachung des Hinweises auf die Patenterteilung: **22.09.2004**
(21) Anmeldenummer: 00810063.8
(22) Anmeldetag: 24.01.2000
(51) Int. Cl.: F16L 3/11

(54) **Haltevorrichtung für eine wasserführende Rohrleitung**
Holding device for a water pipe
Dispositif de maintien pour une conduite d'eau

(30) Priorität: 06.04.1999 CH 64499
(43) Veröffentlichungstag der Anmeldung: 11.10.2000
(73) Patentinhaber: GEBERIT TECHNIK AG, 8645 Jona (CH)
(72) Erfinder: Häsler, Heinz, 8645 Jona (CH)
(74) Vertreter: Groner, Manfred

(56) Entgegenhaltungen:
- US-A- 1 466 292
- US-A- 2 335 833
- US-A- 2 487 989
- US-A- 4 637 175
- US-A- 5 295 646

## Beschreibung

Die Erfindung betrifft eine Haltevorrichtung nach dem Oberbegriff des Anspruchs 1.

Die US 5,295,646 offenbart eine Haltevorrichtung für Rohrleitungen, die im Fall eines Erdbebens verhindern soll, dass die Rohrleitung in Schwingung gerät und in ihrer Längsrichtung als auch quer dazu oszilliert. Die Rohrleitung wird von einer vertikalen Stange und einem Tragelement, einem so genannten "Clevis hanger" getragen. Zur achsialen Fixierung ist der "Clevis hanger" direkt mit einer Rohrschelle verbunden, welche durch einen U-förmigen Bügel und einen Flansch gebildet ist. Diese Haltevorrichtung ist in der Herstellung als auch in der Montage vergleichsweise aufwändig. Bei langen Rohrleitungen müssten entsprechend zahlreiche solche Haltevorrichtungen montiert werden.

Die US 4,637,175 offenbart ein gitterartiges Gerüst zur Befestigung von Rohrleitungen an einer Gebäudedecke. Soll das Gerüst erdbebensicher sein, so sind Querstreben vorgesehen, die jeweils an einem oberen Ende an der Gebäudewand und an einem unteren Ende an Tragprofilen befestigt sind. Die Querstreben erstrecken sich in der Längsrichtung der an diesen befestigten Tragprofilen und die Rohrleitungen quer dazu. Schwingungen-der-Rohrleitungen, welche durch Druckschwankungen im Rohrleitungssystem erzeugt werden, können mit einem solchen Gerüst höchstens durch eine sehr aufwändige und schwere Ausführung wirksam aufgenommen werden.

Eine weitere Haltevorrichtung ist aus der EP 0 274 760 B1 des Anmelders bekannt geworden. In der Praxis hat sich diese Vorrichtung an sich bewährt.

Der Erfinder hat sich nun die Aufgabe gestellt, eine Vorrichtung dieser Gattung zu schaffen, welche Schwingungen der Rohrleitung, die durch Druckschwankungen im Rohrleitungssystem erzeugt werden, noch zuverlässiger als bisher aufnehmen kann und die dennoch einfach herstellbar und montierbar sind.

Die Aufgabe ist gemäss Anspruch 1 gelöst. Mittels der genannten Strebe wird eine 3-Punkt Befestigung geschaffen, welche für das Tragelement einen Fixpunkt bildet. Die Haltevorrichtung kann damit die Rohrleitung im Hinblick auf Verschiebungen in Rohrlängsrichtung wesentlich besser stabilisieren als bisher. Druckschwankungen in der Rohrleitung verursachen somit weniger als bisher Verschiebungen des Rohres in seiner Längsrichtung.

Ein wesentlicher Gesichtspunkt der Erfindung wird auch darin gesehen, dass die Strebe als Zusatzteil der Haltevorrichtung ausgebildet ist und damit lediglich dort eingesetzt werden muss, wo solche Druckschwankungen in der Rohrleitung zu erwarten sind. Für lange Rohrleitungen können auch mehrere solche Streben an geeigneter Stelle angebracht werden. Sind keine höhere Druckschwankungen in der Rohrleitung zu erwarten, so kann die Haltevorrichtung ohne Strebe und damit gemäss der obengenannten EP 0 274 760 B1 ausgebildet sein.

Eine besonders vorteilhafte Ausführung ergibt sich dann, wenn die Strebe an ihren Enden jeweils mit einem Kupplungsstück versehen ist. Diese Kupplungsstücke weisen vorzugsweise jeweils ein Gelenk auf. Damit kann die Strebe mit unterschiedlichen Neigungen montiert werden. Sind die Kupplungsstücke jeweils über ein Gewinde mit einer Stange der Strebe verbunden, so sind Längenänderungen durch entsprechendes Ein- und Ausschrauben der Kupplungen möglich.

Weitere vorteilhafte Merkmale ergeben sich aus den abhängigen Patentansprüchen, der nachfolgenden Beschreibung und der Zeichnung.

Ein Ausführungsbeispiel der Erfindung wird nachfolgend anhand der Zeichnung näher erläutert. Es zeigen:
- Figur 1: eine Ansicht einer erfindungsgemässen Haltevorrichtung mit einem Leitungsabschnitt,
- Figur 2: eine Ansicht einer Kupplung und
- Figur 3: eine Ansicht einer weiteren Kupplung.

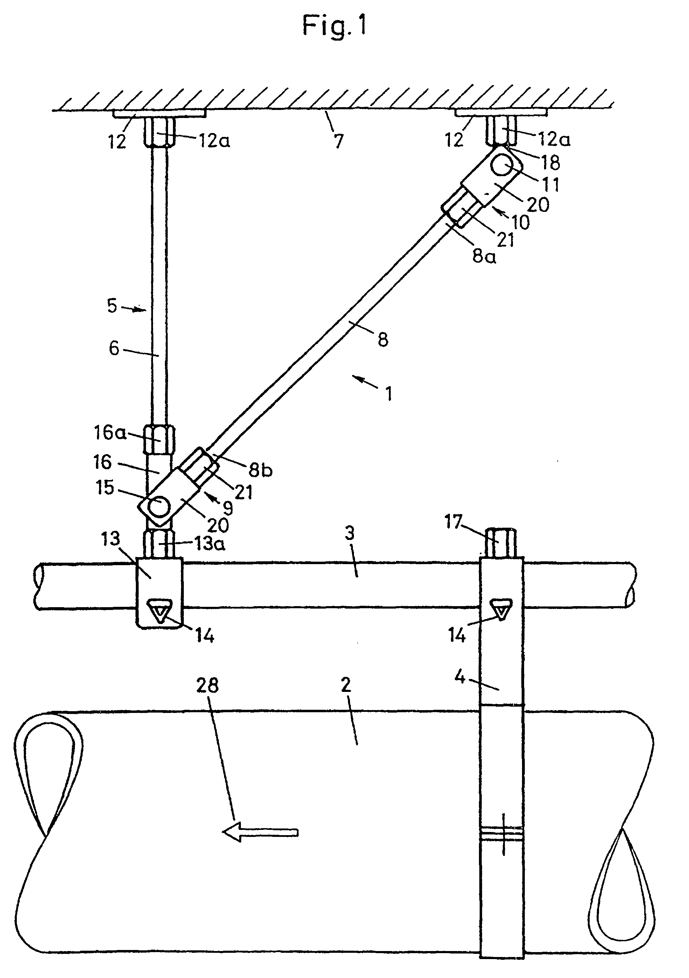

Die Figur 1 zeigt einen Abschnitt einer wasserführenden Rohrleitung 2 aus vorzugsweise Kunststoff. Die Strömungsrichtung ist durch den Pfeil 28 angedeutet. In bestimmten Abständen sind auf der Rohrleitung 2 an sich übliche Rohrschellen 4 befestigt, von welchen in Figur 1 lediglich eine gezeigt ist. Vorzugsweise über der Rohrleitung 2 ist im Abstand zu dieser ein sich zur Rohrleitung 2 parallel erstreckendes Tragelement 3 in der Form einer Stange oder eines Rohres angeordnet. Mittels eines Keils 14 ist dieses Tragelement 3 fest mit der Rohrschelle 14 verbunden. Im Abstand zur Rohrschelle 4 ist auf das Tragelement 3 eine Gabel 13 aufgesetzt und mit einem weiteren Keil 14 fest verbunden. Die Rohrschelle 4 als auch die Gabel 13 sind bezüglich des Tragelementes 3 im montierten Zustand nicht verschiebbar.

Mittels einer Aufhängevorrichtung 1 ist das Tragelement 3 im Abstand zu einer Gebäudewand, vorzugsweise einer Decke 7 mit dieser fest verbunden. Die Aufhängevorrichtung 1 bildet mit der Rohrschelle 4 einen sogenannten Fixpunkt, welcher die Rohrleitung 2 bezüglich der Decke 7 festhält und Verschiebungen auch bei Druckänderungen in der Leitung 2 weitgehend verhindert.

Die Aufhängevorrichtung 1 besteht im wesentlichen aus einer vertikalen Verbindungsstange 5 sowie einer Strebe 8. Mit zwei im Abstand zueinander angeordneten und an der Decke 7 fixierten Verbindungsteilen 12 bilden die vertikale Verbindungsstange 5 und die Strebe 8 einer 3-Punkt-Befestigung, welche sich durch eine hohe Stabilität auszeichnet.

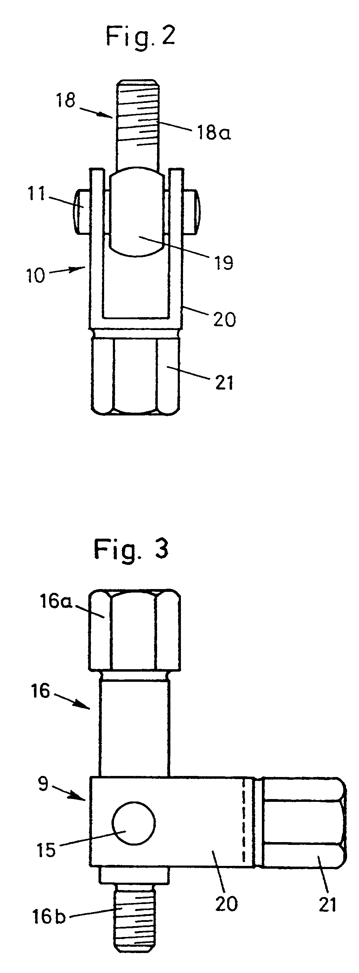

Die im wesentlichen vertikal verlaufende Verbindungsstange 5 weist einen Stab 6 auf, der an einem Ende in eine Mutter 12a des Verbindungsteils 12 und am unteren Ende in eine Mutter 16a einer Kupplung 16 eingeschraubt ist. Am unteren Ende der Kupplung 16 ist gemäss Figur 3 ein Gewindezapfen 16b angebracht, der in eine Mutter 13a der Gabel 13 eingeschraubt ist. Die Verbindungsstange 5 ergibt mit der Kupplung 16 somit eine feste Verbindung zwischen der Decke 7 und dem Tragelement 3. Bei üblicher Beanstandung ist eine solche Fixpunkt-Befestigung hinreichend. Mit der Strebe 8 als Zusatzteil kann die Stabilität jedoch wesentlich erhöht werden.

Die Strebe 8 ist, wie in Figur 1 ersichtlich, bezüglich der Strömungsrichtung 28 der Rohrleitung 2 geneigt. Die Verbindung der Strebe 8 mit der Verbindungsstange 5 und dem in Figur 1 gezeigtem Verbindungsteil 12 erfolgt über das Kupplungsteil 16 sowie ein weiteres Kupplungsteil 10. Beide Kupplungsteile bilden ein Gelenk, das durch einen Gelenkbolzen 15 bzw. 11 und einen gabelförmigen Körper 20 gebildet wird. Sowohl das Kupplungsstück 16 als auch das Kupplungsstück 10 besitzen einen solchen gabelförmigen Körper 20, wie die Figuren 2 und 3 zeigen. Auf diese gabelförmige Körper 20 sind jeweils eine Mutter 21 aufgeschweisst, in welche jeweils ein Ende 8a bzw. 8b der Strebe 8 eingeschraubt ist. Das Kupplungsstück 10 weist zudem eine Augenschraube mit einem Gelenkkörper 19 sowie einem Aussengewinde 18a auf. Die Augenschraube 18 ist in die Mutter 12a eingeschraubt.

Die Strebe 8 bildet mit den Kupplungsstücken 16 und 10 wie erwähnt ein Zusatzteil. Sollte eine solche Strebe 8 nicht erforderlich sein, so könnte die Rohrschelle 4 gemäß der obengenannten EP 0 274 760 B1 an der oben angebrachten Mutter 17 mit einer hier nicht gezeigten weiteren vertikalen Stange 16 direkt mit dem darüber liegenden und an der Decke 7 befestigten Verbindungsteil 7 verbunden werden.

## Patentansprüche

1. Haltevorrichtung mit einer wasserführenden Rohrleitung (2), mit einem an der Rohrleitung (2) angeordneten Tragelement (3) und wenigstens einer Rohrschelle (4), welche das Tragelement (3) mit der Rohrleitung (2) verbindet und mit einer Aufhängevorrichtung (1), die wenigstens eine im Wesentlichen vertikal verlaufende Verbindungsstange (5) aufweist, die an ihrem oberen Ende mit einer Gebäudewandung (7), insbesondere Decke und an ihrem unteren Ende mit dem Tragelement (3) verbunden ist, mit einer geneigt zur Längsrichtung der Rohrleitung (2) verlaufenden Strebe (8), die an ihrem einen Ende mit der Gebäudewandung (7) und mit ihrem anderen Ende mit der Verbindungsstange (5) verbunden ist, **dadurch gekennzeichnet, dass** das Tragelement (3) als ein sich zur Rohrleitung (2) parallel erstreckendes Tragelement (3) in der Form einer Stange oder eines Rohres ausgebildet ist und dass die Rohrschelle (4) im Abstand zum unteren Ende der vertikal verlaufenden Verbindungsstange (5) fest mit dem Tragelement (3) verbunden ist.

2. Vorrichtung nach Anspruch 1, **dadurch gekennzeichnet, dass** die Strebe (8) an ihren Enden jeweils an einem Befestigungsteil (12) bzw. an der Verbindungsstange (5) befestigt ist.

3. Haltevorrichtung nach Anspruch 1 oder 2, **dadurch gekennzeichnet, dass** die Strebe (8) eine Stange aufweist, die an jedem Ende (8a, 8b) ein Aussengewinde besitzt, mit dem sie jeweils mit einem Kupplungsstück (16, 10) verbunden ist.

4. Vorrichtung nach Anspruch 3, **dadurch gekennzeichnet, dass** wenigstens ein Kupplungsstück (16, 10), vorzugsweise beide Kupplungsstücke, ein Drehgelenk (11, 15) aufweist.

5. Vorrichtung nach Anspruch 3 oder 4, **dadurch gekennzeichnet, dass** ein Kupplungsstück (1) die Strebe (8) mit einem an der Gebäudewand (7) verankerten Befestigungsteil (12) verbindet und dieses Kupplungsstück (10) eine Augenschraube (18) aufweist, die in eine Mutter (12a) des Befestigungsteils (12) eingeschraubt ist.

6. Vorrichtung nach einem der Ansprüche 3 bis 5, **dadurch gekennzeichnet, dass** wenigstens ein Kupplungsstück (10) einen Gabelkörper (29) aufweist, der mit einem am unteren Ende der Verbindungsstange (5) angeordneten Verbindungsteil gelenkig verbunden ist.

## Claims

1. Holding device with a pipeline (2) carrying water, with a support element (3) arranged on the pipeline (2) and at least one pipe clamp (4) that connects the support element (3) to the pipeline (2) and with a hanger device (1) having at least one connecting rod (5) running essentially vertically, connected at its upper end to a building wall (7), especially a ceiling, and at its lower end to the support element (3), with a brace (8) running inclined at an angle to the longitudinal direction of the pipeline (2), connected at its lower end to the building wall (7) and by its other end to the connecting rod (5), **characterized in that** the support element (3) is constructed as a support element (3) in the form of a rod/bar or a pipe extending parallel to the pipeline (2), and **in that** the pipe clamp (4) is attached rigidly to the support element (3) and spaced at a distance relative to the lower end of the vertical connecting rod (5).

2. Device according to Claim 1, **characterized in that** the brace (8) is attached at its ends respectively to a connector (12) and to the connecting rod (5).

3. Holding device according to Claim 1 or 2, **characterized in that** the brace (8) has a rod/bar having at each end (8a, 8b) an external thread via which it is connected to a coupling (16, 10) in each case.

4. Device according to Claim 3, **characterized in that** at least one coupling (16, 10) and preferably both couplings has/have a rotating joint (11, 15).

5. Device according to Claim 3 or 4, **characterized in that** a coupling (1) attaches the brace (8) to a connector (12) attached to the building wall (7) and this coupling (10) has an eyebolt (18) that is screwed into a nut (12a) of the connector (12).

6. Device according to one of the Claims 3 to 5, **characterized in that** at least one coupling (10) has a fork body (29) that is attached in a flexibly jointed manner to a connector arranged at the lower end of the connecting rod (5).

## Revendications

1. Dispositif de maintien avec une conduite d'eau (2), avec un élément de support (3) disposé sur la conduite (2) et au moins une bride de fixation (4), qui assemble l'élément de support (3) à la conduite (2) et avec un dispositif de suspension (1), qui présente au moins une barre d'assemblage (5) orientée sensiblement en direction verticale, qui est assemblée par son extrémité supérieure à un mur du bâtiment (7), de préférence à un plafond, et par son extrémité inférieure à l'élément de support (3), avec une entretoise (8) orientée en oblique par rapport à la direction longitudinale de la conduite (2), qui est assemblée par sa première extrémité au mur du bâtiment (7) et par son autre extrémité à la barre d'assemblage (5), **caractérisé en ce que** l'élément de support (3) est constitué par un élément de support (3) en forme de barre ou de tube s'étendant parallèlement à la conduite (2) et **en ce que** la bride de fixation (4) est solidement assemblée à l'élément de support (3) à distance de l'extrémité inférieure de la barre d'assemblage (5) orientée verticalement.

2. Dispositif selon la revendication 1, **caractérisé en ce que** l'entretoise (8) est fixée par ses extrémités respectivement à une pièce de fixation (12) ou à la barre d'assemblage (5).

3. Dispositif de maintien selon la revendication 1 ou 2, **caractérisé en ce que** l'entretoise (8) présente une barre, qui possède à chaque extrémité (8a, 8b) un filet extérieur, avec lequel elle est chaque fois assemblée à une pièce de couplage (16, 10).

4. Dispositif selon la revendication 3, **caractérisé en ce qu'**au moins une pièce de couplage (16, 10), de préférence les deux pièces de couplage, présente une articulation rotative (11, 15).

5. Dispositif selon la revendication 3 ou 4, **caractérisé en ce qu'**une pièce de couplage (10) assemble l'entretoise (8) à une pièce de fixation (12) ancrée dans le mur de bâtiment (7) et cette pièce de couplage (10) présente une vis à oeillet (18), qui est vissée dans un écrou (12a) de la pièce de fixation (12).

6. Dispositif selon l'une quelconque des revendications 3 à 5, **caractérisé en ce qu'**au moins une pièce de couplage (10) comporte un corps en fourche (29), qui est assemblé de façon articulée à une pièce d'assemblage disposée sur l'extrémité inférieure de la barre d'assemblage (5).
